# EUROPEAN PATENT APPLICATION

(11) **EP 3 381 843 A2**
(43) Date of publication of application: **03.10.2018**
(21) Application number: 18161756.4
(22) Date of filing: 14.03.2018
(51) Int. Cl.: B65G 47/08, B65B 35/40, B65G 47/84, B65G 47/31, B65G 47/90, B65G 47/82

(54) **DEVICE FOR FEEDING CONTAINERS**

(30) Priority: 27.03.2017 EP 17163102
(71) Applicant: Tetra Laval Holdings & Finance S.A., 1009 Pully (CH)
(72) Inventor: ANSALONI, Roberto, 41043 Formigine (IT); ROSIGNOLI, David, 44123 Ferrara (IT)
(74) Representative: Tetra Pak - Patent Attorneys SE

(57) **Abstract**

A device for feeding containers (100) comprises:
- a first unit (3) configured to advance a succession of containers (100) in a row along a first feed path, the first unit (3) having an outlet (6b) at which the containers (100) are distanced from one another according to a predetermined spacing;
- a second unit (14) located downstream of the first unit (3) and configured to receive the succession of containers (100) from the first unit (3) at said outlet (6b) and to collect the containers into groups, the second unit (14) being also configured to advance the groups along a second feed path to a discharging station (21);
- a removing device (25) located at said discharging station (21) and configured to remove the groups of containers (100) from the second unit (14).

The first unit (3) has first holding means (7) active on the containers (100) to move the containers (100) along the feed path. The second unit (14) has second holding means (15) active on the containers (100) to move the containers (100) along the second feed path. The first unit (3) and the second unit (14) are partially overlapped in an overlapping zone (O) in such a way that the second holding means (15) come into engagement with the containers (100) while the containers (100) are still held by the first holding means (7).

## Description

The invention relates to a device for feeding containers, particularly containers for liquid or pourable food products. More generally, the invention can be applied to the feeding of articles in the packaging industry.

A typical non-limiting example of a container that can be processed by the device according to the invention is the parallelepiped-shaped container known as Tetra Brik or Tetra Brik Aseptic (registered trademarks), which is made by folding and sealing laminated strip packaging material.

Moreover, the device according to the invention can be used in several kinds of packaging machines such as cartoning machines.

Known packaging machines are equipped with feeding or "sequencing" devices which are capable of ensuring that a substantially constant pitch is achieved in a sequence of containers exiting the device. These sequencing devices, which are also known as "belt brakes", comprise a plurality of modules, each of which includes a lower conveyor belt and two side belts. A bottom face of each container rests on the lower conveyor belt, which moves along an advancement direction. Each of the two side belts engages with a respective side face of a container.

In these devices it is known to use a first "belt brake" to create a compact sequence of containers, i.e. a sequence in which the containers are in mutual contact without spacing between adjacent containers, and a subsequent spacing belt ensuring that a desired distance is reached between two adjacent containers. Then the containers are received by a downstream conveyor which performs further processing of the containers.

The known devices have the drawback that between the exit of the spacing belt and the downstream conveyor the containers are not constrained. Hence, the containers can displace from their desired position and reach a position that is not correct or even does not allow the containers to be grasped by the downstream conveyor. As a consequence, the containers can be wrongly positioned, thereby requiring stoppage and restarting of the machine.

An object of the invention is to improve known devices for feeding containers, particularly containers for pourable food products.

A further object is to provide a device for feeding containers that can increase reliability of the feeding operations and therefore enhance the whole productivity of the machine in which the device is installed.

According to the invention, there is provided a device for feeding containers, comprising:
- a first unit configured to advance a succession of containers in a row along a first feed path, the first unit having an outlet at which the containers are distanced one from another according to a predetermined spacing;
- a second unit located downstream of the first unit and configured to receive the succession of containers from the first unit at said outlet and to collect the containers into groups, the second unit being also configured to advance the groups along a second feed path to a discharging station;
- a removing device located at said discharging station and configured to remove the groups of containers from the second unit;
wherein the first unit has first holding means active on the containers to move the containers along the feed path, wherein the second unit has second holding means active on the containers to move the containers along the second feed path, and wherein the first unit and the second unit are partially overlapped in an overlapping zone (0) in such a way that the second holding means come into engagement with the containers while the containers are still held by the first holding means.

Owing to the invention, it is possible to constantly control the position of the containers, thereby increasing the precision in conveyance of the containers and substantially eliminating the need of stopping the machine due to badly positioned containers.

Along the first feed path, the containers are held by the first holding means that prevent the containers from inappropriately positioning. The same applies along the second feed path owing to the second holding means. Furthermore, the second holding means, which start to engage with the containers while the containers are still held by the first holding means, ensure that control of the containers is not lost while the containers pass from the first holding means to the second holding means. Accurate positioning of the containers is consequently achieved throughout the device.

In an embodiment, the second unit comprises two distinct conveyors, each conveyor being provided with a group of paddles designed to engage respective containers, said conveyors being independently driven so that the corresponding group of paddles can be moved independently of the other group of paddles in order to independently convey respective groups of containers.

This increases the efficiency of the device, because while one of the conveyors is waiting for the containers coming from the first unit, the other conveyor - which has previously been filled with containers - can perform the required operations on the already received conveyors.

A preferred, non-limiting embodiment of the present invention will be described by way of example with reference to the accompanying drawings, in which:
- Figure 1 is a view of a device according to the invention;
- Figure 2 is a view of the device of Figure 1 with some parts removed;
- Figure 3 is a side view of the device shown in Figure 2;

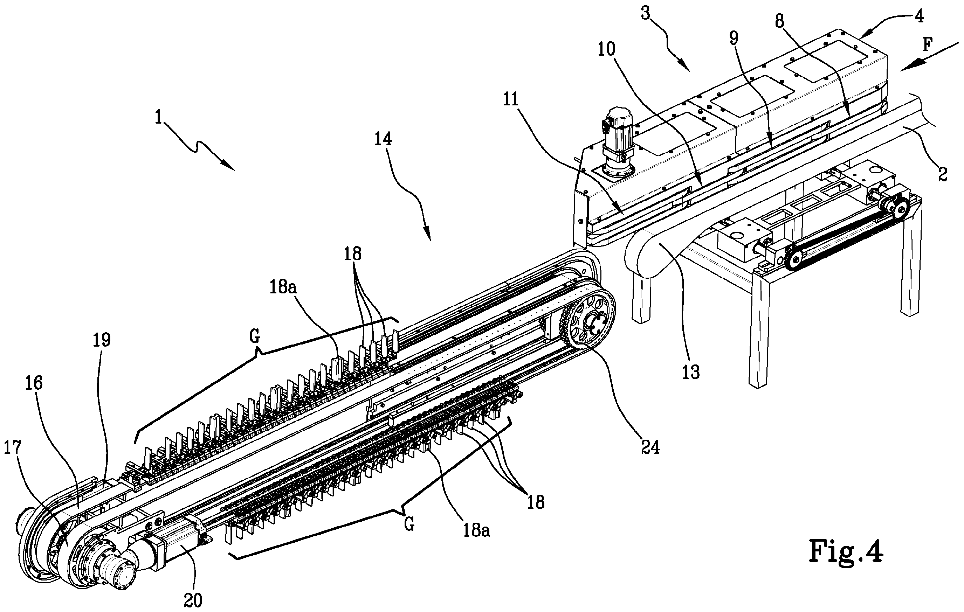

- Figure 4 is a view of the device of Figure 2 with further parts removed;
- Figure 5 is a sectional view of a part of the device of Figure 1 taken along a vertical sectional plane;
- Figure 6 shows a schematic movement of some parts of the device shown in Figure 5;
- Figure 7 is an enlarged and interrupted view showing a detail of the device according to the invention.

With reference to the Figures, a device for feeding containers is shown, which is indicated by reference 1 and which preferably is included in a packing machine, for example a cartoning machine for enclosing containers or groups of containers into boxes.

In the Figures only the feeding device 1 is shown since the remaining part of the packing machine is not relevant to the intelligibility of the invention.

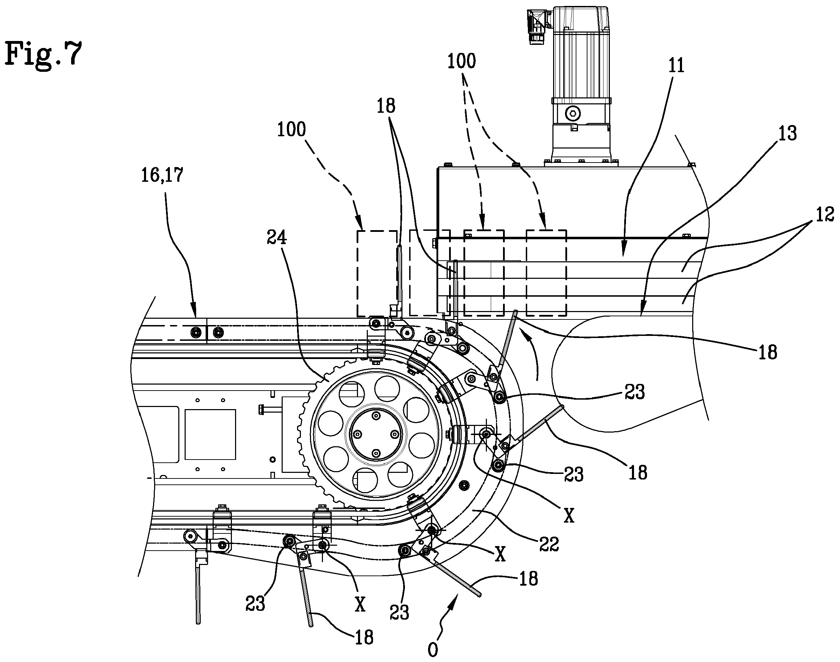

According to a flow direction F, a succession of containers 100 (Figure 7) is advanced on a guide 2, along an inlet path towards a first unit 3. In detail, the containers 100 travel along the guide 2 while they are arranged in a row, namely in a succession one after another. During this movement, it is not requested that the containers 100 be arranged at a specific distance from one another. For example, the guide 2 can be connected to an outlet of a packaging machine for manufacturing the containers 100 and the containers 100 may be released on the guide 2 in a randomly spaced arrangement.

During conveyance, the containers 100 can be arranged in an erected configuration so that their prevalent dimension is vertical.

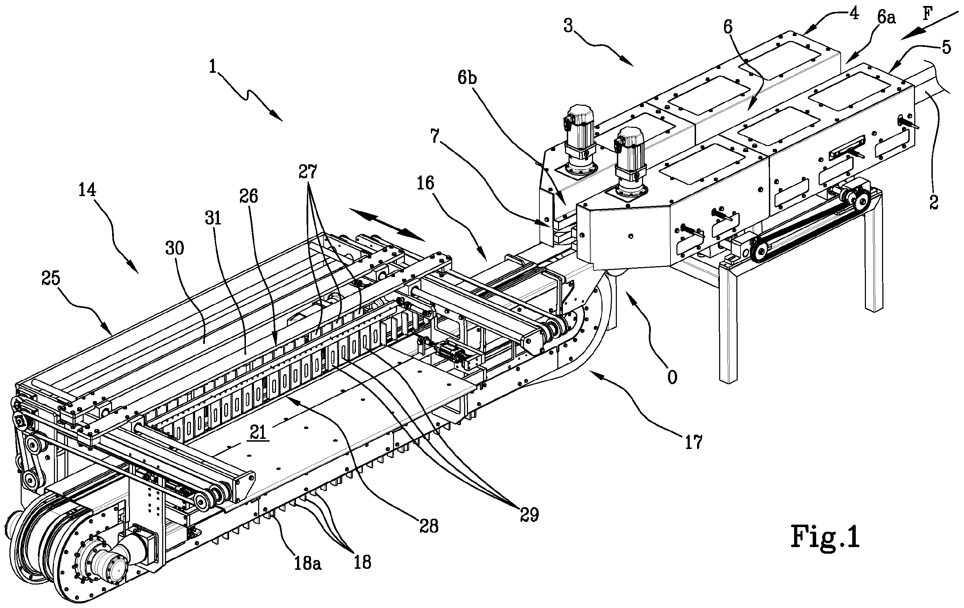

As can be seen in Figure 1, the first unit 3 comprises two blocks 4, 5 which are spaced apart from one another to delimit a conveying channel 6 therebetween. The containers 100 can be advanced in the conveying channel 6 in a row, one after another. The channel 6 extends between an inlet 6a and an outlet 6b and is preferably rectilinear.

The first unit 3 is equipped with first holding means 7 active on the containers 100 to engage the containers 100 at their lateral surface and to drag the containers 100 along a feed path along the channel 6.

In more detail, the first holding means 7 have four sections, in particular a compacting section 8 and, downstream thereof, a first spacing section 9, a second spacing section 10 and a third spacing section 11 arranged in a sequence along the feed direction F.

The compacting section 8 operates on the containers 100 to create a succession of containers 100 in mutual contact. Hence, the compacting section 8 acts as a brake on the flow of containers 100 coming from the guide 2.

Each spacing section 9, 10 and 11 advances the containers 100 at respective increasing speeds to gradually increase a distance between the containers 100, until a predetermined distance is reached at the outlet 6b. The first section 9 advances the containers 100 with an advancement speed that is greater than the advancement speed of the compacting section 8, so as to space the compacted containers 100 one from another.

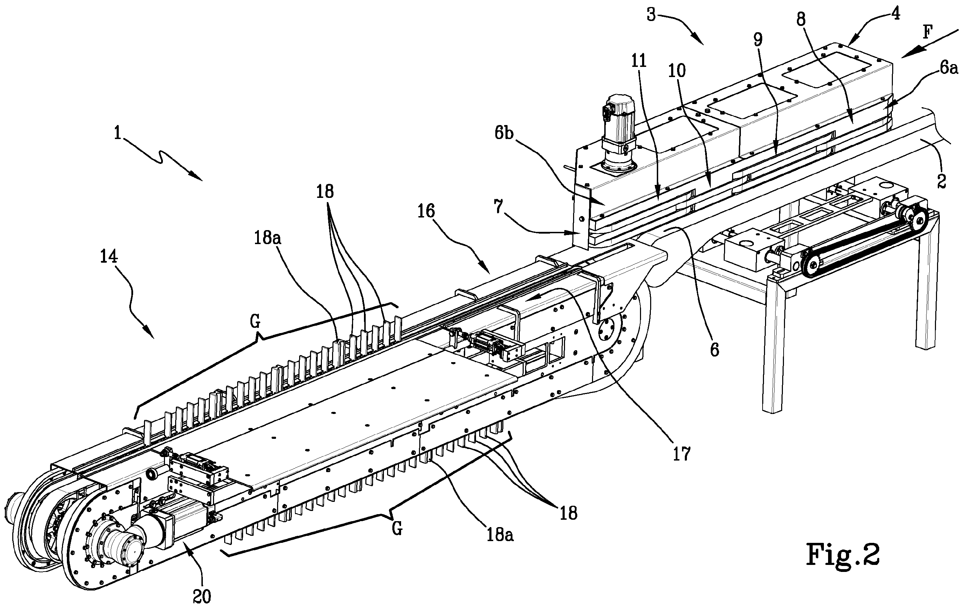

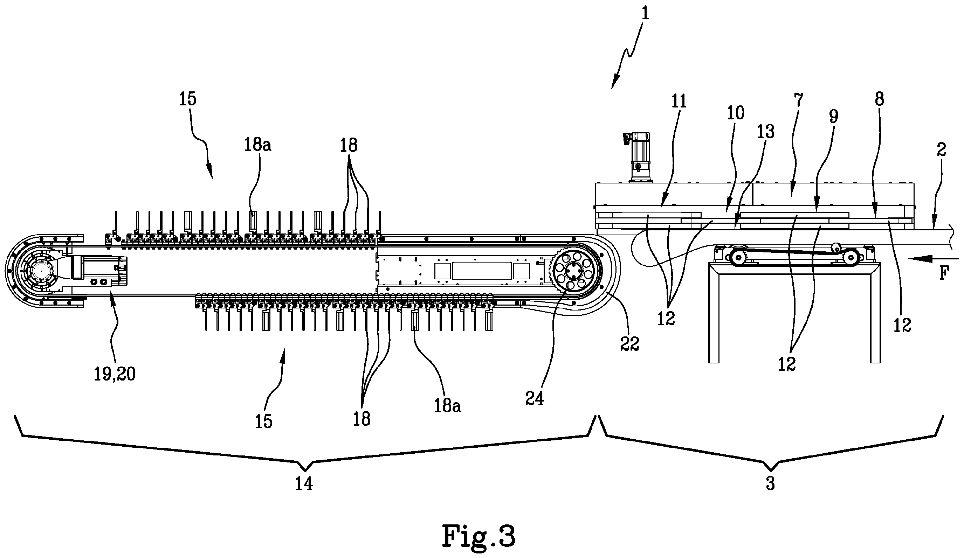

As can be seen in Figures 2 and 3 in which one of the blocks 4, 5 has been removed for the sake of clarity, each of the compacting section 8, the first spacing section 9, the second spacing section 10 and the third spacing section 11 comprises one or two pairs of opposite belts 12. Each belt 12 has a flat guiding portion parallel to the conveying channel 6. The guiding portions of each belt 12 of one of the sections 8 to 11 face each other to define therebetween a part of the conveying channel 6.

In more detail, the sections 8 to 11 are configured so that one of them has two pairs of belts 12 and the next one has a single pair of belts 12, preferably located at an intermediate height between the two pair of belts 12 of the previous section.

Each of the belts 12 moves along a closed path that lies in a horizontal plane, and the lying planes of two subsequent belts 12 are distanced one from another (i.e. placed at different heights) so that two subsequent belts 12 partially overlap one to another. This ensures that the belts 12 always perform an effective gripping action on the containers 100.

Preferably, moreover, the conveying channel 6 is also delimited at least partly by a lower belt 13 or other similar conveyor to support the containers 100 at the bottom thereof.

Downstream of the first unit 3, the device 1 comprises a second unit 14 configured to receive the succession of spaced containers 100 from the first unit 3 at the outlet 6b thereof and to collect the containers 100 into groups which are advanced along a second path, which is preferably rectilinear. In other words, the containers 100 coming from the first unit 3 define a continuous succession whilst the second unit 14 arranges the containers 100 in a sequence of groups. In each group, the containers 100 are arranged in a row along the second path.

The second unit 14 is equipped with second holding means 15 active on the containers 100 to engage the containers 100 at their back surface (relative to the flow direction F) and to move the containers 100 along the second feed path.

The second holding means 15 comprise two parallel conveyors 16, 17 each provided with one or more groups "G" of paddles 18 designed to engage a back portion of a respective container 100 released from the first unit 3.

The conveyors 16, 17 are in the form of a closed-loop belt or similar, for example a chain conveyor or the like. The conveyors 16, 17 move along respective closed paths lying on vertical planes and wrap around respective pulleys rotating around horizontal axes.

The paddles 18 are fixedly attached to the respective conveyor 16, 17. In particular, each paddle 18 has a base portion fixed to a respective conveyor 16, 17 by means of fixing means such as screws or similar.

Each group "G" of paddles 18 is moved by the respective conveyor 16, 17.

In the embodiment shown in the drawings, each conveyor 16, 17 supports one group "G" of paddles 18. Anyway, each conveyor 16, 17 can have two or more groups "G" of paddles 18, each group "G" being separated from the next group "G" by a portion of the respective conveyor 16, 17 having no paddles.

Moreover, each group "G" of paddles 18 can include distancing paddles 18a which have an increased thickness relative to the remaining paddles 18, so as to define a further spacing between subgroups of the paddles 18. In this case, each group "G" of paddles 18 creates a corresponding group of containers 100 comprising a number of subgroups of containers 100. The subgroups of containers 10 are separated by a gap, created by a distancing paddle 18a, which is longer than the distance between adjacent containers 100 of each subgroup.

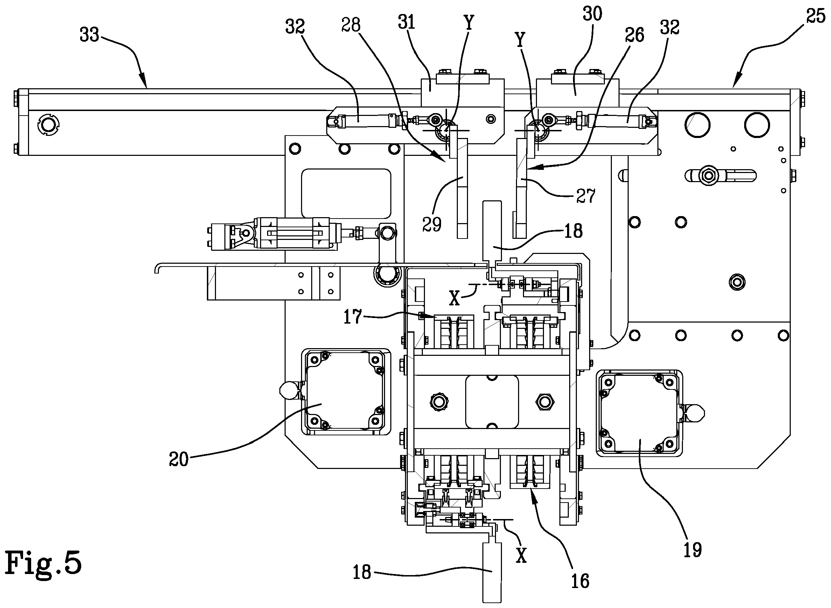

Moreover, all the paddles 18, i.e. the paddles 18 of the two conveyors 16, 17 are longitudinally aligned on a common advancing line or vertical lying plane, which is preferably a middle vertical plane lying between the conveyors 16, 17, as can be seen in Figure 5.

Advantageously, the two conveyors 16, 17 are independently driven (for example by respective motors 19, 20 independently controlled) so that the two groups "G" of paddles 18 can be moved independently of each other so as to independently convey respective groups of containers 100.

In particular, at a portion of the conveyors 16, 17 opposite the further portion of the conveyors 16, 17 that faces the outlet 6b of the first unit 3, there is a discharging station 21 at which the containers 100 are disengaged from the paddles 18 to be removed from the respective conveyor 16, 17.

In this situation, when a first conveyor of the two conveyors 16, 17 is receiving the containers 100 at the paddles 18 from the first unit 3, a second conveyor of the conveyors 16, 17 (which already received the containers 100 immediately before) can advance the paddles 18 towards the discharging station 21.

Preferably, the advancing movement of the second conveyor 16, 17 (i.e., the one that advances the paddles 18 towards the discharging station 21) can be performed at a speed which is higher than the speed of the first conveyor 16, 17 being filled. Moreover, at the discharging station 21 the second conveyor 16, 17 can be stopped while the first conveyor 16, 17 is still advancing to receive its predetermined number of containers 100.

Advantageously, the first unit 3 and the second unit 14 are partially overlapped, defining an overlapping zone "0", in such a way that the second holding means 15 come into engagement with the containers 100 while the containers 100 are still held by the first holding means 7.

This feature can be better seen in Figure 7, which shows how the paddles 18 behave while receiving the respective container 100 from the first unit 3.

In particular, the paddles 18 are mounted on the respective conveyor 16, 17 in an adjustable way so that each paddle 18 can rotate about a respective horizontal swiveling axis "X" preferably fixed relative to the conveyor 16, 17. In more detail, each paddle 18 has a hinge at its base portion fixed to the respective conveyor 16, 17. In this situation, the conveyors 16, 17 are configured to perform a rotation of the paddles 18 about their axis "X" at least in the overlapping zone "0" between the first unit 3 and the second unit 14.

As can be seen in Figure 7, each conveyor 16, 17 comprises a fixed cam 22 and each paddle 18 of the conveyor 16, 17 bears a roller 23 located at a distance from the swiveling axis "X". The roller 23, engaging into the fixed cam 22 during movement of the conveyor 16, 17, causes rotation of the paddle 18 about its swiveling axis "X". As can be seen in Figure 7, the roller 23 and the cam 22 are arranged in such a way that the paddle 18 is set in rotation about its swiveling axis "X" during movement in the overlapping zone "0" between the units 3, 14.

The cam 22 has a U-shaped conformation extending around the rotation axis of a pulley 24 of the respective conveyor 16, 17 located near the overlapping zone "0". Moreover, the cam 22 is not conformed as an exact arc of circumference around the axis of the pulley 24, but has a variable distance from the axis of the pulley 24.

Outside of the overlapping zone "0", the paddles 18 project from the respective conveyor 16, 17 in a direction perpendicular to the portion of conveyor 16, 17 to which the paddles 18 are anchored. When approaching the overlapping zone "0", the paddles 18 assume a forwardly-bent position. By means of this change in the orientation of the paddles 18, the paddles 18 can enter a space between two consecutive containers 100 from below as shown in Figure 7.

According to an advantageous embodiment of the invention, at least a sensor (not shown) is provided to operate in the overlapping zone "0" or near this zone in order to detect whether a container 100 is actually transferred from the first unit 3 to a respective paddle 18 of the second unit 14. A control unit (not shown) is connected to the sensor and is active on the conveyors 16, 17 to stop a conveyor 16, 17 when the sensor detects that a paddle 18 of the conveyor 16, 17 is not receiving a container 100 from the first unit 3. In other words, if the sensor detects that a paddle 18 is not receiving a container 100, the paddle 18 stops and waits for the container 100.

It is conceivable that a single sensor is used or that a respective sensor is associated to each conveyor 16, 17.

At the discharging station 21 a removing device 25 is operative to remove the groups of containers 100 from the second unit 14, in particular from the paddles 18.

In detail, the removing device 25 comprises at least one comb-shaped member 26 movable transversely, preferably perpendicularly, to the second feed path of the second unit 14 (namely to the vertical lying plane of the conveyors 16, 17) and having a plurality of fingers 27 extending downwardly. Each of the fingers 27 is configured to pass through adjacent paddles 18 of at least one of the conveyors 16, 17 in the discharging station 21, so as to engage a respective container 100 and to move the container 100 away from the corresponding conveyor 16, 17.

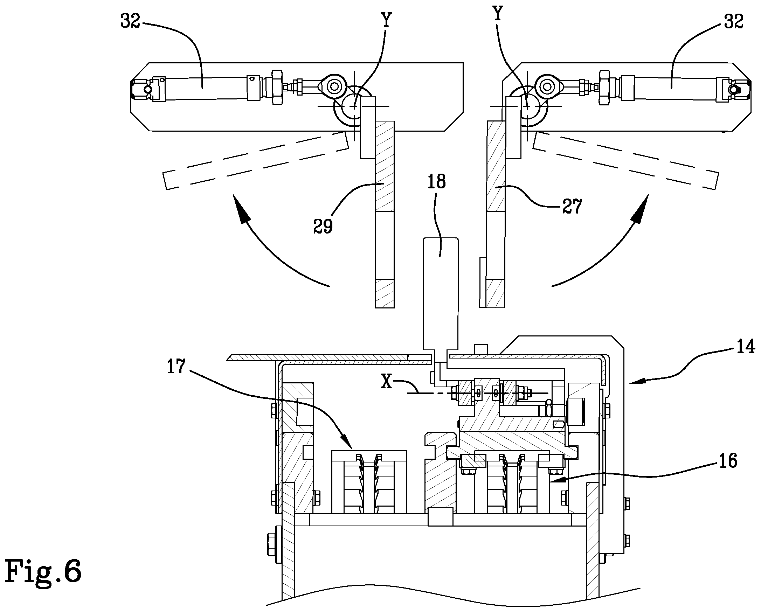

More preferably, the removing device 25 comprises a comb-shaped member 26 and a further comb-shaped member 28, each of which is movable transversely to the conveyors 16. The further comb-shaped member 28 has respective fingers 29. The comb-shaped member 26 and the further comb-shaped member 28 are configured to be located on opposite sides of the groups "G" of paddles 18 of the conveyors 16, 17 to grasp the containers 100 (engaged by the paddles 18) with a clamping action on opposite sides of the containers 100. Moreover, at least one of the comb-shaped members 26, 28, preferably both, is movable between an engagement configuration (Figure 6, continuous line) in which the fingers 27, 29 of the corresponding comb-shaped member 26, 28 are lowered to engage the containers 100 and a transfer configuration (Figure 6, dashed line) in which the fingers 27, 29 are raised to allow a translation of the corresponding comb-shaped member 26, 28 without interfering with the containers 100. In particular, the transfer configuration is used by at least one of the comb-like members 26, 28 (the one located at the foremost position during removal of the containers 100 from the conveyors 16, 17) to pass over the released containers 100 during the return stroke.

In detail, each comb-shaped member 26, 28 is mounted on a respective sliding carrier 30, 31 which is configured to translate with the comb-shaped member 26, 28 transversely to the conveyors 16, 17 along guides 33. Moreover, the comb-shaped members 26, 28 are hinged to the respective carriers 30, 31 to rotate about a respective horizontal axis "Y", the engagement position and the transfer position of the comb-shaped members 26, 28 being obtained by a rotation of the comb-shaped members 26, 28 about the respective horizontal axis "Y". This rotation is obtained by the action of respective actuators 32 which, in the embodiment shown, are linear pistons.

After the containers 100 have been removed and released, they can be picked-up by suitable means (not shown) to be further processed, for example packed into a wrapper or a box.

In view of the aforementioned structure and function of the device 1, the device 1 can ensure a reliable transfer of the containers from the first to the second unit taking advantage of the overlapping zone.

Moreover, the device 1 has a high productivity since it can advance a group of containers 100 to the discharging station 21 while another group of containers 100 is being released to the second unit 14.

## Claims

1. Device for feeding containers (100), comprising:
- a first unit (3) configured to advance a succession of containers (100) in a row along a first feed path, the first unit (3) having an outlet (6b) at which the containers (100) are distanced from one another according to a predetermined spacing;
- a second unit (14) located downstream of the first unit (3) and configured to receive the succession of containers (100) from the first unit (3) at said outlet (6b) and to collect the containers into groups, the second unit (14) being also configured to advance the groups along a second feed path to a discharging station (21);
- a removing device (25) located at said discharging station (21) and configured to remove the groups of containers (100) from the second unit (14);
wherein the first unit (3) has first holding means (7) active on the containers (100) to move the containers (100) along the feed path, wherein the second unit (14) has second holding means (15) active on the containers (100) to move the containers (100) along the second feed path, and wherein the first unit (3) and the second unit (14) are partially overlapped in an overlapping zone (0) in such a way that the second holding means (15) come into engagement with the containers (100) while the containers (100) are still held by the first holding means (7).

2. Device according to claim 1, wherein the first holding means (7) are configured to engage the containers (100) at a lateral surface of each container (100).

3. Device according to claim 1 or 2, wherein the second holding means (15) are configured to engage the containers (100) at a back surface of each container (100) .

4. Device according to any preceding claim, wherein the second unit (14) comprises two distinct conveyors (16, 17) each conveyor (16, 17) being provided with a group of paddles (18) designed to engage respective containers (100), said conveyors (16, 17) being independently driven so that the corresponding group of paddles (18) can be moved independently of the other group of paddles (18) in order to independently convey respective groups of containers (100) .

5. Device according to claim 4, and further comprising at least a sensor operating in the overlapping zone (0) to detect whether a container (100) is transferred from the first unit (2) to a respective paddle (18) of a conveyor (16, 17), a control unit being provided to stop said conveyor (16, 17) when the sensor detects that a paddle (18) of said conveyor (16, 17) is not receiving a container (100) from the first unit (3).

6. Device according to claim 4 or 5, wherein each conveyor (16, 17) is movable along a path that lies in a respective vertical plane, and wherein the paddles (18) are mounted on the respective conveyor (16, 17) in a way that allows orientation of the paddle (18) to be changed, so that each paddle (18) can rotate about a respective horizontal swiveling axis (X), the conveyors (16, 17) being configured to perform a rotation of the paddles (18) about their swiveling axis (X) at least in the overlapping zone (0) .

7. Device according to claim 6, wherein each conveyor (16, 17) comprises a fixed cam (22) and wherein each paddle (18) is hinged to a portion of the conveyor (16, 17) to rotate about the corresponding swiveling axis (X), each paddle (18) bearing a roller (23) configured to engage the fixed cam (22) during movement of the conveyor (16, 17) and being arranged in such a way that the paddle (18) is set in rotation about its swiveling axis (X) with a forward movement at least in the overlapping zone (0).

8. Device according to any one of claims 4 to 8, wherein the removing device (25) comprises at least a comb-shaped member (26, 28) movable transversely to said second feed path and having a plurality of fingers (27, 29), each of said fingers (27, 29) being configured to pass through adjacent paddles (18) of at least one of said conveyors (16, 17) at the discharging station (21) to engage a respective container (100) and to transversely move the container (100) away from said conveyor (16, 17).

9. Device according to claim 8, wherein the removing device (25) comprises two of said comb-shaped members (26, 28), movable transversely to the conveyors (16, 17) and configured to be located on opposite sides of the groups (G) of paddles (18) of the conveyors (16, 17) to grasp the containers (18) engaged by the paddles (18) with a clamping action on opposite sides of the containers (18), at least one of the comb-shaped members (26, 28) being movable between an engagement configuration in which the fingers (27, 29) of said comb-shaped member (26, 28) are lowered to engage the containers (100) and a transfer configuration in which the fingers (27, 29) of said comb-shaped member (26, 28) are raised to allow a translation of the comb-shaped member (26, 28) without interfering with the containers (100).

10. Device according to claim 9, wherein each comb-shaped member (26, 28) is mounted on a respective carrier (30, 31) which is configured to translate with the comb-shaped member (26, 28) transversely to the conveyors (16, 17) along a respective guide (33), and wherein the comb-shaped members (26, 28) are hinged to the respective carriers (30, 31) to rotate about a respective horizontal axis (Y), said engagement position and said transfer position of the comb-shaped members (26, 28) being obtained by a rotation of the comb-shaped members (26, 28) about the respective horizontal axis (Y).

11. Device according to any preceding claim, wherein the first holding means (7) has at least a compacting section (8) and at least two spacing sections (9, 10, 11), located in succession downstream of the compacting section (8), wherein the compacting section (8) operates on the containers (100) to create a succession of containers (100) in contact one with another and wherein each spacing section (9, 10, 11) is configured to move the containers (100) at respective increasing speeds along the first feed path to gradually increase a distance between the containers (100) until a predetermined distance is reached at the outlet (6b).

12. Device according to claim 10, wherein each of the compacting section (8) and spacing sections (9, 10, 11) comprises at least a pair or opposite belts (12) each having a rectilinear guiding portion, the guiding portions of each section (8, 9, 10, 11) facing each other to define a channel (6) between them for a succession of containers (100) in a row.

13. Device according to claim 12, wherein each of said belts (12) moves along a closed path that lies in a horizontal plane, the lying planes of two subsequent belts (12) being vertically distanced so that the two subsequent belts (12) are partly overlapping each other along the first feed path.
